## Europäisches Patentamt
## European Patent Office
## Office européen des brevets

(11) Publication number: **0 086 932**
**A1**

---

(12)

# EUROPEAN PATENT APPLICATION

(21) Application number: **83100087.2**

(22) Date of filing: **07.01.83**

(51) Int. Cl.³: **B 41 B 21/32**
**G 03 B 1/42**

(30) Priority: **28.01.82 GB 8202499**

(43) Date of publication of application:
**31.08.83 Bulletin 83/35**

(84) Designated Contracting States:
**BE DE FR IT NL**

(71) Applicant: **ALLIED CORPORATION**
**Columbia Road and Park Avenue P.O. Box 2245R (Law Dept.)**
**Morristown New Jersey 07960(US)**

(72) Inventor: **Barton, Peter**
**59 Blenheim Drive**
**Bredon Tewkesbury Gloucestershire(GB)**

(74) Representative: **Bryant, Frank**
**Linotype & Machinery Limited Norman Road**
**Altrincham Cheshire WA 14 4ES(GB)**

---

(54) Intermittent film feeding system.

(57) An intermittent film feeding system for an imaging system includes a pair of input [11, 12] output [25, 26] nip rollers between which is located a film supporting backing plate [4] of semi-cylindrical form. In a film processing cycle film is overfed to impose a resilient compression on the film causing it to conform very accurately to the shape of the backing plate. Overfeeding is accomplished by driving the input nip rollers while locking the output nip rollers. The overdrive of the film produces a lateral buckle [35]. The buckle produces a resilient compression which ensures the film is in intimate contact with the backing plate.

Fig.1.

DESCRIPTION

INTERMITTENT FILM FEEDING SYSTEM

BACKGROUND OF THE INVENTION

The invention relates to film feeding systems of an intermittent feed type. It is understood that "film" means a continuous web of material such as paper, plastic or a thin metallic web, which may be provided with a receptive surface, for example, a light sensitive or emission recording surface.

Intermittent film feeding systems are used in, for example, film printing machines, projectors, photocomposing machines and the like where a predetermined length of film is advanced to an operating station where the film is used for some process, such as exposure to light as in the taking of a photograph or for exposing a film to light through a film transparency for photographic reproduction or printing or for the recording of characters on a film in photocomposition.

Once operated on, the film is advanced a predetermined step.

There are very many ways such a film or film advance can be effected and as such are well known; intermittent motor driven sprocket wheels, Maltese cross mechanisms and manual ratchet mechanisms are typical examples of effecting intermittent film feed.

Where a very sharp image recordal on a sensitized surface is required, it is essential that the film be positioned very accurately in relation to the distance from the sensitized surface to the lens of light transmission system, likewise the film must present a true flat surface free from any ripples or bulges which could distort the image.

An application of the present invention is to the film feeding system of a photocomposing machine where a very high degree of accuracy of film feed and film location is required.

Because of the requirement of accuracy, it has been usual to advance the film step by step over a back plate against which the film may be held as by side guides or suction.

Character images are projected onto the film by means, for example, of a prism deflecting an image carrying beam, the prism reciprocating across the width of the film to compose a line of characters, the film being advanced one line on the completion of one traverse of the prism.

Advance of the film has to be very accurately controlled to ensure that the composed lines are exactly parallel to each other and also equi-spaced.

The mechanism employed for film advancing and also the system to effect projections of the character images onto the film is necessarily difficult to manufacture, because of its requirement of accuracy, and hence is expensive.

## SUMMARY OF THE INVENTION

An object of the present invention is to provide an intermittent film feed method and apparatus which is relatively inexpensive to manufacture and ensures that the film is maintained flat across its width.

The invention is an intermittent film feeding mechanism which includes a backing plate of concave semi-cylindrical form, film feeding means pushing film along the surface of the backing plate, film take up means located adjacent the end of the backing plate remote from the film feeding means, wherein after a predetermined length of film has been fed by the film feeding means the film take up means stops movement of

-3-

the film therethrough but the film feeding means continues to feed film for a period whereby the overfeed of the film imposes a predetermined resilient compression on the film on the backing plate so that the film conforms precisely to the contour of the backing plate, undertaking an operation on the film and releasing the film take up means so that another film feed cycle can take place.

## BRIEF DESCRIPTION OF THE DRAWINGS

Figure 1 is a top perspective diagrammatic sketch view of one example of film feed mechanism with carriage casing removed;

Figure 2 is a detail cross section sketch view of the film feed shown in Figure 1;

Figure 3 is a detail cross section sketch view of the film feed shown in Figure 1 with the carriage casing;

Figure 4 is an end elevation detail on 1V - 1V Figure 3; and

Figure 5 is a detail of another example of film feed control mechanism.

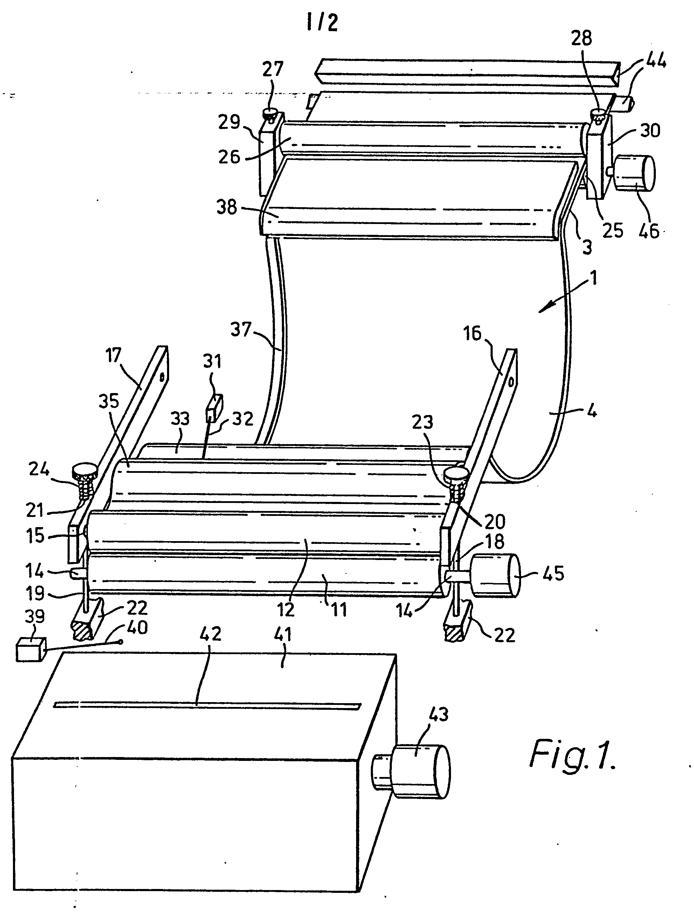

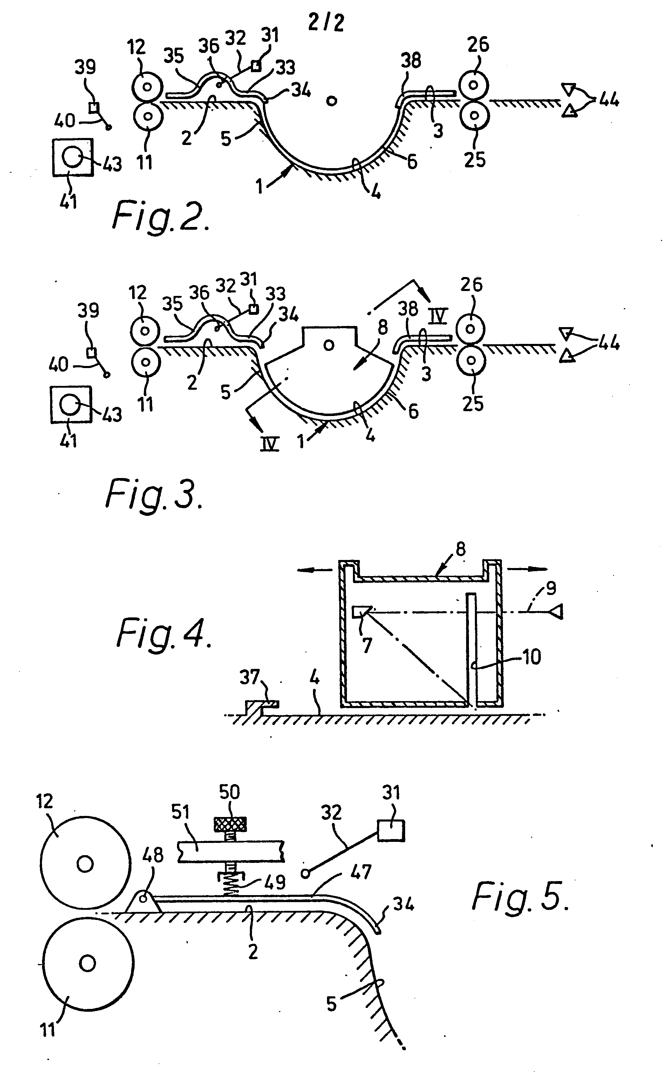

Referring to Figures 1 and 3, a backing plate, generally designated 1, has a leading and trailing plate portions 2, 3, respectively. The backing plate has a concave semi-cylindrical section 4 which curves at its ends into the leading and trailing edge portions.

When the apparatus is to be used in a photocomposing machine, it is necessary that the concave portion of the backing plate be manufactured with great precision, and the points 5, 6, of that concave portion define a segment of constant radius about a prism. The arcuate distance 5, 6 can be the width of a page of a broadsheet newspaper.

The prism 7 is part of the optical system of a photocomposing machine, not shown. The optical system forms no part of the present invention and hence is not described in detail.

Referring to Figure 4, the prism 7 is carried on mechanism mounted within a housing, generally described as 8, itself carried on a rail, not shown, so that the housing can be moved axially across the face of the concave section 4.

Prism 7 is rotated during photocomposition so that character images or character image construction pulses transmitted along optical axis 9 are deflected by the prism and pass through a circumferential slot 10 in the housing 8 onto the surface of the sensitized film which is located between the outer surface of the housing 8 and the concave section 4. Rotation of the prism thus effects generation of a line of images.

As photocomposition takes place, so the housing is moved axially across the face of the concave section 4.

Located at the leading edge of the leading plate portion 2 is a pair of input nip rollers 11, 12, and at the end of the trailing plate 3, a pair of output nip rollers 25, 26. The roller 25 is driven by a motor 46.

Both pairs of nip rollers 11, 12, and 25, 26 are identical and the description of one pair is to be understood to be a description of both pairs.

As shown in Figure 1, the nip rollers 11, 12 are superposed.

The journals 14 of the roller 11 are carried in bearings in a side frame, neither of which is shown. The roller 11 is driven by a motor 45.

The journals 15 of the roller 12 are carried in link arms 16, 17 pivotally mounted on side frames, not shown.

To adjust the nip pressure between the rollers 11, 12 bolts 18, 19 pass freely through holes 20, 21 in the link arms 16, 17, respectively; the ends of the bolts are screw threaded into part of a sub-frame 22 of the machine.

Compression springs 23, 24 encircle the bolts 18, 19, respectively and bear at one end against the cheese head of its associated bolt, and against the top of the link arm at the other end.

Screwing the bolts in or out increases or decreases the resilient pressure applied by the roller 12 onto the roller 11.

If desired alternative means of varying this nip pressure can be used, whereby the resilient pressure applied can be equalized between the ends of the rollers.

Conveniently the same mechanism may be provided to adjust the nip pressure of the rollers 25, 26 or the nip pressure may be adjusted by applying resilient loading to the journals of the roller 26, in known manner. The resilient loading can be adjusted by screwing in or out the screws 27, 28 in the journal boxes 29, 30.

A top film guide plate 33 is positioned above the leading plate portion 2. This guide plate 33 extends across the whole width of the leading plate, commencing just behind the rollers 11, 12 and ending in a curved down portion 34.

Extending laterally across the guide plate 33 is a semi-cylindrical formed portion 35, called for convenience, the buckle bulge 35.

A buckle sensor microswitch 31 is positioned above the buckle bulge 35, a sensing arm 32 of the microswitch 31 extending through a slot 36 in the buckle bulge 35.

An edge guide 37 provides a lip in superposed relation to the backing plate 1. Conveniently this edge guide 37 continues from the end of the top film guide plate 33 to join a rear top film guide plate 38, which curves down into the concave portion of the backing plate and ends adjacent the entrance of the nip of the rollers 25, 26.

The rear top film guide plate 38 extends across the whole width of the trailing plate 3.

A film sensor microswitch 39 with a sensor arm 40 may be positioned between a film cassette or reservoir 41 and the input nip rollers 11, 12.

The cassette 41, which is light tight, has a film feed slot 42 incorporating a light trap, not shown.

0086932

A small motor 43 may be coupled to the film feed roll core and drives the film reel against the direction of film feed through a slipping clutch, not shown. The drive acts as a light brake on the film feed.

Film, not shown, is pushed through the system as hereafter described, and subsequent to passage through the output nip rollers 25, 26 it can be fed to an automatic film processor take up cassette (neither of which are shown) or the like.

A web guillotine 44 of any suitable known type can be positioned in the path of the treated web to sever the web into sheets of predetermined size.

It will be appreciated that the whole of the system is fitted in a light tight cabinet.

In operation the film cassette 41 is located in the system.

Web, for example, film is manually fed into the input nip rollers 11, 12 and the motor 45 is energized. To assist in this initial feeding, a guide plate, not shown, may extend between the cassette and the input nip rollers. The door of the light tight cabinet is then closed.

Nip, or the degree of pressure applied by the rollers 11, 12, is adjusted by the screws 18, 19 to ensure that the film is evenly fed between the rollers and is smoothed out.

As the film leaves the input nip rollers 11, 12, it enters the film guide 33 which ensures the film follows the contour of the leading plate portion 2.

Film is pushed along portion 2 and is turned into the arcuate portion of the backing plate by the curved down portion 34. One edge of the film is guided by the edge guide 37, and the remainder of the film is guided between arcuate portion 5, 6 and the housing 8. The film is then guided by the rear top film guide plate 38 to the output nip rollers 25, 26.

Obviously any width of film up to maximum width acceptable to the system can be fed along the back plate.

0086932

Feeding the film continues until the leading edge of the film enters the nip of the output nip rollers 25, 26. Motor 46 driving the roller 25 is energized with the motor 43 so that a length of film is advanced equal to the exposed leading edge of the film and the length of arc 5 to 6. The length of arc 5 to 6 can be considered to be one frame (or it can be the size of one complete broadsheet page).

When the correct amount of film (one frame plus the exposed leading edge) has been pushed into the system by the nip rollers 11, 12, by energizing the motor 45, output nip rollers 25, 26 are locked against movement by de-energizing the motor 46. The input nip rollers 11, 12, however, are driven for an additional period, predetermined by an adjustable timer (not shown) in the motor 45 circuit or until the buckle sensor 31 is actuated de-energizing the motor 45 and using it as a brake against further nip rotation at this time.

The additional film feed imparted by the input nip rollers 11, 12 when the output nip rollers, 25, 26 have been locked causes the film to buckle laterally across its width at the rear end of the leading plate portion 2 and before the film enters the edge guide 31. The height of this buckle is sensed by the arm 32 on the buckle sensor 31 and tripping of the sensor will de-energize the inward nip roller motor 45. The buckle sensor arm 32 may be adjustable so that different heights of buckle can be sensed to accommodate characteristics of the different films.

At this stage both input and output nip rollers are locked against rotation by their respective motors, and the film contained within the backing plate is under resilient compression imposed by the buckle. This compression is sufficient to ensure that the film intimately follows the contour of the semi-cylindrical portion of the backing plate and presents a smooth surface on a very accurate radius from the prism 7.

At the end of the film feeding cycle, the motor 43 of the cassette 41 is energized to ensure that the film feed is braked.  If desired a sensor 39 with sensor arm 40 is fitted between the film cassette 41 and rollers 11, 12 either to give an audible and/or visual indication of a film break or exhaustion of the cassette, or to indicate some irregularity of the film feed.

With a film frame on the backing plate 1, operation on the film takes place and the film can be advanced for the next frame.  The output nip roller motor 46 is energized to commence pulling film and the input nip roller motor 45 is also energized, and the next frame of film is moved into place, whence the nip roller locking cycle sequence is repeated.

Processed film can be fed ito a take up cassette (not shown), or into an automatic developer (not shown) or to another process station.

If desired the film can be chopped into sheets by the operation of the web guillotine 44.

In place of the upper film guide plate 33 with the buckle portion 35, a flat plate 47, Figure 5, is pivotally mounted at its forward end on ears 48 at the side of the leading plate portion 2.

The plate 47 has a downturned trailing edge 34 similar to that of the plate 33.

The plate 47 is resiliently urged towards the plate portion 2 by a light helical spring 49.

Compression in the spring 49 can be adjusted by means of the screw 50 which passes through a structural member 51 of the frame of the system.

The spring 49 and screw 50 may be mounted centrally of the plate 47 or a spring and screw may be located at both sides of the plate 47.

The operation of the system is basically the same as in the previous example.  The overfeed of the film, once the output rollers 25, 26 have been locked, instead of buckling in the bulge 35, lifts the plate 47 against the action of the spring(s) 49 for a predetermined amount or until the sensor 31 is actuated.

Compression of the system is adjusted by **0086932** adjusting the screws) 5.

Claims:

1. An intermittent film feeding mechanism including a backing plate of concave semi-cylindrical form, film feeding means pushing film along the surface of the backing plate, film take up means located adjacent the end of the backing plate remote from the film feeding means, wherein after a predetermined length of film has been fed by the film feeding means, the film take up means stops movement of the film therethrough but the film feeding means continues to feed film for a period whereby the overfeed of film imposes a predetermined resilient compression on the film on the backing plate, undertaking an operation on the film and releasing the film take up means so that another film feed cycle can take place.

2. An intermittent film feeding mechanism characterized by the inclusion of a pair of input nip rollers, a pair of output nip rollers and a backing plate of concave semi-cylindrical form between the two sets of nip rollers, the input nip rollers allowing film to be fed over the surface of the concave surface of the backing plate to pass between the output nip rollers, so that when a desired length of the film has been fed, the output nip rollers prevent further film movement therebetween, but the input nip rollers continue to allow the passage of film for a predetermined time and then prevent further film movement whereby the film overfeed imposes resilient compression on the film on the backing plate ensuring that the film conforms precisely to the contour of the backing plate, operating on the film and then advancing the film for the commencement of another cycle.

3. An intermittent film feeding mechanism according to claim 1 wherein the overfeeding of the film creates a buckle laterally across the film adjacent the feed end of the concave surface of the backing plate.

4. An intermittent film feeding mechanism according to claim 1 or 2 wherein there are provided film guide plates in superposed relationship to the backing plate, adjacent each end thereof to guide the film into and out of the concave portion of the backing plate.

5. An intermittent film feed mechanism according to claim 1 or 2 wherein the concave portion of the backing plate is provided with a guide plate adjacent one edge of the backing plate to assist in film feeding along the backing plate.

6. An intermittent film feed mechanism according to claim 3 wherein there is provided a buckle sensor controlling the film feeding means whereby the film feeding means is halted when the buckle is of predetermined size.

7. A method of intermittently feeding film characterized by the steps of feeding film by film feeding means along the semi-cylindrical surface of a backing plate to a film take up means, which film take up means halt the passage of film therethrough after a predetermined length of film has been fed, the film feeding means continuing to operate for a period so that the overfeed imposes a resilient compression on the film so that it conforms precisely to the contour of the backing plate, operating on the film and releasing the take up means so that another film feed cycle can be effected.

8. A method of intermittently feeding film characterized by the steps of passing film between input nip rollers, over the semi-cylindrical surface of a backing plate and then between output nip rollers, stopping feed through the output nip rollers after a predetermined length of film has been fed, but continuing to feed film through the input nip rollers until a resilient compression on the film is imposed and then stopping the input nip rollers and locking film movement so that the film conforms precisely to the contour of the backing plate, operating on the film and operating the output nip rollers so that another film feed cycle can commence.

9. A method of intermittently feeding film accord-

0086932

ing to claim 7 wherein the overfeeding of the film creates a buckle laterally across the film adjacent the feed end of the concave surface, sensing the height of the buckle by sensing means which stop the film feed means when the buckle reaches a predetermined height.

10. A method of intermittently feeding film according to claim 7 wherein subsequent to a film advance, during which film is pushed by the input nip rollers along the backing plate, the film is locked against movement by the output nip rollers although the input nip rollers continue to operate causing a laterally extending buckle to be formed in the film adjacent the start of the semi-cylindrical portion of the backing plate, the degree of buckle being sensed by a sensor which controls the input nip rollers and cuts out film feed when the buckle has reached a predetermined size.

1/2

*Fig.1.*

Fig. 2.

Fig. 3.

Fig. 4.

Fig. 5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US-A-4 168 506  (J.L.CORSOVER) *Columns 3-5; figures 1,2* | 1,2 | B 41 B  21/32 C 03 B   1/42 |
| A | GB-A-1 154 948  (FAIRCHILD CAMERA AND INSTRUMENT CO.) *Page 2, lines 112-119; figure 1* | 1 | |
| A | FR-A-1 183 110  (F.A.CALDWELL) *Page 3, column 2; figures 1-9* | 1 | |
| A | US-A-3 974 949  (P.J.PETERSEN) *Columns 2-4; figures 1,2* | 1,2 | |

**TECHNICAL FIELDS SEARCHED (Int. Cl. 3)**

```
C 03 B    1/42
B 41 B   21/32
B 41 B   21/34
C 03 B    1/18
C 03 B   37/02
G 06 K   13/30
G 06 K   13/22
G 06 K   13/20
G 06 K   13/07
G 01 D   15/24
G 01 D   15/28
B 65 H   17/42
```

The present search report has been drawn up for all claims

| Place of search | Date of completion of the search | Examiner |
|---|---|---|
| THE HAGUE | 01-05-1983 | BOEYKENS J.W. |